# EUROPEAN PATENT SPECIFICATION

(11) **EP 3 562 196 B1**
(45) Date of publication and mention of the grant of the patent: **21.10.2020**
(21) Application number: 18169510.7
(22) Date of filing: 26.04.2018
(51) Int. Cl.: H04W 24/06

(54) **MOBILE COMMUNICATION TESTER, TESTING SYSTEM AS WELL AS A METHOD FOR TESTING AT LEAST ONE DEVICE UNDER TEST**
MOBILKOMMUNIKATIONSTESTER, TESTSYSTEM SOWIE VERFAHREN ZUM TESTEN VON MINDESTENS EINER ZU TESTENDEN VORRICHTUNG
TESTEUR DE COMMUNICATION MOBILE, SYSTÈME DE TEST AINSI QU'UN PROCÉDÉ DE TEST D'AU MOINS UN DISPOSITIF SOUS TEST

(43) Date of publication of application: 30.10.2019
(73) Proprietor: Rohde & Schwarz GmbH & Co. KG, 81671 München (DE)
(72) Inventor: MYLSAMY, Raaja Guru, 641032 Coimbatore (IN)
(74) Representative: Prinz & Partner mbB

(56) References cited:
- US-A1- 2010 075 678
- US-A1- 2014 169 177
- US-B1- 7 889 663

## Description

The invention relates to a mobile communication tester, a testing system as well as a method for testing at least one device under test in a busy and variant network environment.

Nowadays, the number of participants within a network environment, for instance a wireless network environment, increases due to the fact that many devices and/or apparatus typically comprise a communication interface so that they may be connected via this communication interface with the network environment.

In the state of the art, it is known to evaluate the characteristics of such a device and/or apparatus (device under test) as being a participant of the respective network environment, for instance a wireless network environment. Accordingly, the device under test itself as well as the network environment are simulated so that it can be verified how the device under test may behave in the respective network environment.

However, it is also necessary to test the characteristics of the respective participant of the network environment under real conditions which means in a network environment comprising several communication participants. So far, these tests are performed completely virtual which means that the device under test, the network as well as the other communication participants are simulated in order to verify the characteristics of the device under test in a busy and variant network environment comprising a plurality communication participants. However, the entire simulation may be fault-prone since assumptions have to be done with regard to the device under test which behavior is unknown so far. Accordingly, the measurement results obtained may be not as reliable as desired.

US 2010/0075678 A1 describes a method and a system for stress testing mobile network equipment using a common public radio interface.

US 7 889 663 B1 shows a test equipment and method for evaluating handoff in wireless networks.

Accordingly, there is a need for a possibility to test a device under test in a busy and variant network environment ensuring reliable measurement results.

The invention provides a mobile communication tester for testing at least one real device under test in a busy and variant network environment, the mobile communication tester comprising at least one radio frequency interface for establishing a communication connection with the real device under test as well as at least one control interface for controlling the device under test. Further, the mobile communication tester comprises a simulation module configured to simulate virtual communication participants of the network environment that are enabled to communicate with the at least one real device under test so as to simulate the busy and variant network environment, wherein the simulation module is configured to duplicate a massive number of the at least one real device under test connected to the mobile communication tester and to simulate a massive number of reference devices being different to the at least one real device under test based on at least one reference template in communication layers above the physical layer.

The invention is based on the finding that a busy and variant network environment can be simulated by simulating the other communication participants. Therefore, the mobile communication tester is used to test a real device under test being part of the test environment, also called testing system, established by the mobile communication tester, so that it can be verified how the real device under test behaves in the busy and variant network environment with a variety of communication participants that may communicate with the real device under test so as to establish the busy and variant network environment.

The virtual communication participants may be simulated by duplicating a massive number of the at least one device under test connected to the mobile communication tester resulting in a massive number of virtual devices under test corresponding to the one being connected to the mobile communication tester. Alternatively or additionally, the busy and variant network environment is established by using at least one reference template, for instance a reference template for a device under test, in order to simulate virtual communication participants being different to the at least one device under test that is connected to the mobile communication tester. These different virtual communication participants may correspond to reference devices based on the at least one reference template used for simulating purposes.

In general, the mobile communication tester ensures that stress testing of the real device under test, which is connected to mobile communication tester, can be performed by simulating live network busy conditions due to the fact that the respective virtual communication participants are simulated.

The variant network environment is established due to the fact that different terminal devices, for instance user end devices, are simulated in the network environment provided for testing the device under test so that communication participants may be simulated that are different to the real device under test. Hence, the device under test can be tested with different testing scenarios applied depending on the communication participants simulated. In fact, the mobile communication tester comprising the simulation module ensures that a massive number of different devices can be simulated for testing purposes wherein all of these different devices may be connected within the network environment in reality. Thus, these communication participants may correspond to so-called loT devices (Internet of Things devices).

The at least one reference template used for simulating the massive number of different communication participants ensures that the mobile communication tester is enabled to be used by many device manufacturers or device vendors so that a wide interoperable testing coverage of the respective device under test is ensured by the mobile communication tester since the network environment being of interest is loaded appropriately.

In other words, the simulation module may simulate a massive number of reference devices based on at least one reference template in order to simulate virtual communication participants of a second type of the virtual communication participants different to the duplicates of the at least one device under test connected to the mobile communication tester which may correspond to a first type of the virtual communication participants.

Since the virtual communication participants are simulated in communication layers above the physical layer, the respective devices simulated, namely the duplicated devices under test and/or the references devices, are not real devices being connected via the physical layer.

According to an aspect, the mobile communication tester comprises a storage unit, wherein the at least one reference template is stored in the storage unit. The storage unit may be accessed by the simulation module in order to load a certain reference template for simulating the respective communication participants to be used for testing the device under test. Hence, different tests scenarios can be applied for testing the device under test appropriately depending on the reference template loaded for simulating the respective communication participant(s).

According to another aspect, the at least one control interface is established on a printed circuit board. The printed circuit board and a portion of the housing of the mobile communication tester may be used for accommodating the at least one device under test in a simple and cost-efficient manner. The device under test is connected to the mobile communication tester via the printed circuit board establishing a connection between the device under test and the mobile communication tester.

Further, the mobile communication tester may comprise a traffic generator module configured to simulate traffic conditions of the network environment, in particular wherein the generator module is configured to simulate traffic conditions of the network environment dynamically. The traffic generator module may simulate data traffic and/or signaling both generating traffic. Hence, the mobile communication tester may be used for testing the device under test with regard to data communication and/or signaling communication. Thus, traffic may generally relate to data, voice and other communication traffic. In fact, the traffic generator module may be configured to apply certain traffic profile configurations. Different devices under test may be tested by applying the same traffic profile so that the measurement results of the different devices under test can be compared with each other easily. The dynamic adaption of the traffic conditions simulated ensure that a real network environment can be simulated and tested, in particular the behavior of the device under test with regard to changing traffic conditions.

For instance, higher layer signaling messages for voice, SMS, data or any application level are generated by the traffic generator module.

The traffic generator module may be configured to simulate a high number of SMS, a high data exchange and/or a high number of voice calls that are used for establishing the busy and variant network environment.

Moreover, the traffic generator module may be connected with the simulation module so that traffic conditions are simulated depending on the virtual communication participants simulated by the simulation module. The traffic generator module takes into account the virtual communication participant(s) simulated so that the traffic conditions applied for testing the device under test correspond to the virtual communication participant(s) simulated. For instance, the type of the communication participant(s) simulated may be taken into account by the traffic generator module.

Generally, the traffic generator module may be configured to maintain a process or rather thread per virtual communication participant, in particular per virtual communication participant selected from the plurality of virtual communication participants simulated.

Another aspect provides that the mobile communication tester comprises a network simulator module connected with the at least one device under test via the at least one radio frequency interface. The network simulator module interacts with the real device under test so that it provides the radio frequency interface used by the device under test for communication purposes.

For instance, the network simulator module is a wireless network simulator module so that the radio frequency interface is established by a wireless radio frequency interface.

However, the radio frequency interface may also be established by a wired radio frequency interface.

Particularly, the network simulator module is connected with the traffic generator module so that the mobile communication tester is configured to trigger the virtual communication participants to communicate with the device under test via the network simulator module and the traffic generator module. The traffic generator module may select at least one of the several virtual communication participants simulated by the simulation module for being used as communication participant for testing the device under test in the busy and variant network environment. Hence, the information of the at least one communication participant used for testing the device under test is forwarded to the network simulator module so that a certain network environment is established by the network simulator module to which the real device under test is connected for testing purposes.

Moreover, the network simulator module may be configured to perform operational measurements, to prepare performance metrics of the at least one device under test, in particular based on the traffic profile configuration used by the traffic generator module, and/or to provide message logs with regard to the interoperable analyses of the device under test. Hence, the network simulator module being used to directly communicate with the real device under test is also configured to perform the respective tests of the device under test in order to obtain the measurement results. The network simulator module receives the respective information from the traffic generator module so as to establish the network environment to be used for testing the device under test.

Generally, the mobile communication tester may be configured to verify the interoperability of the device under test with the virtual communication participants. Accordingly, it can be verified whether or not the device under test is able to communicate with the communication participant simulated in the desired manner.

As several different virtual communication participants may be simulated due to the reference template used for simulating the virtual communication participants, the interoperability of the device under test may be verified in a wide range.

Particularly, the mobile communication tester can be used by a wide number of customer for testing their respective devices with regard to interoperability since the respective reference template for simulating the virtual communication participants can be loaded.

Another aspect provides that the mobile communication tester has several control interfaces for controlling several devices under test, in particular wherein the mobile communication tester is configured to verify the interoperability of the devices under test with each other. Accordingly, several real devices under test can be tested simultaneously by the mobile communication tester. The several real devices under test may be participants of the network environment. Accordingly, the mobile communication tester may establish a network environment comprising several real devices under test as well as virtual communication participants simulated appropriately.

The interoperability of the several devices under test with each other and/or with the virtual communication participants may be tested appropriately.

Further, the invention provides a testing system comprising at least one device under test and a mobile communication tester as mentioned above, wherein the at least one device under test is connected with the mobile communication tester via at least one of the radio frequency interface and the control interface.

Accordingly, the testing system comprises the at least one device under test so that the testing environment is established. The device under test is connected to the mobile communication tester, in particular the network environment established. The device under test connected with the mobile communication tester is a real device under test that is not simulated. Hence, the real characteristics can be verified easily while it is exposed to a network environment corresponding to a busy and variant one.

Further, the invention provides a method for testing at least one real device under test in a busy and variant network environment, with the following steps:
- Connecting the real device under test to a mobile communication tester,
- Simulating communication participants of the network environment that are enabled to communicate with the at least one real device under test so as to simulate the busy and variant network environment by duplicating a massive number of the at least one real device under test connected to the mobile communication tester, and
- Simulating a massive number of reference devices being different to the at least one real device under test based on at least one reference template in communication layers above the physical layer.

The advantages and characteristics mentioned above also apply to the method in a similar manner.

Moreover, the device under test is tested in the busy and variant network environment by the following steps:
- Accessing the simulated virtual communication participants by a traffic generator module, in particular a virtual communication participants cloud which comprises the virtual communication participants simulated,
- Triggering at least one of the virtual communication participants to communicate with the at least one device under test via a network simulator module so as to generate traffic information,
- Forwarding the traffic information to the at least one device under test via the at least one radio frequency interface,
- Receiving a response from the at least one device under test via the at least one radio frequency interface, and
- Forwarding the response to the at least one virtual communication participant triggered.

The mobile communication tester used for performing the respective method ensures that information or rather traffic such as data, signaling and so on can be exchanged between the real device under test and the virtual communication participant simulated appropriately.

The response correspond to a higher layer response, in particular a higher layer signaling response, of the device under test.

The response is forwarded to the traffic generator module by the network simulator module wherein the traffic generator module forwards the respective response to the at least one virtual communication participant triggered previously.

For clear assigning or rather unambiguous allocating purposes, the respective traffic information, signal(s) and/or response(s) each comprise an identification so that it is ensured that the response(s) can be forwarded to the respective virtual communication participant. Hence, the traffic information, signal(s) and/or response(s) may relate to so-called call IDs.

According to another aspect, operational measurements are performed, message logs with regard to the interoperable analysis of the device under test are provided, and/or performance metrics of the at least one device under test are prepared during the testing, in particular based on the traffic profile configuration used by the traffic generator module. Thus, the device under test can be tested or rather measured simultaneously while the traffic between the device under test and the communication participant(s) simulated is exchanged. Accordingly, the characteristics of the device under test can be verified appropriately.

The operational measurements may correspond to time-out measurements and/or latency measurements for different types of traffic such as data transfer and/or calls.

Moreover, the traffic generator module may trigger several virtual communication participants subsequently. The traffic generator module may load the next virtual communication participant in a list (queue) for being applied for testing the device under test. Once a certain virtual communication participant has been used for testing, the next one is loaded so that the device under test can be tested in a variant network environment, in particular with regard to different kinds of communication participants.

The invention will now be described with reference to the enclosed drawings. In the drawings,
- Figure 1 schematically shows a testing system according to the invention comprising a mobile communication tester according to the invention, and
- Figure 2 shows a flow-chart illustrating a method for testing a device under test according to the invention.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

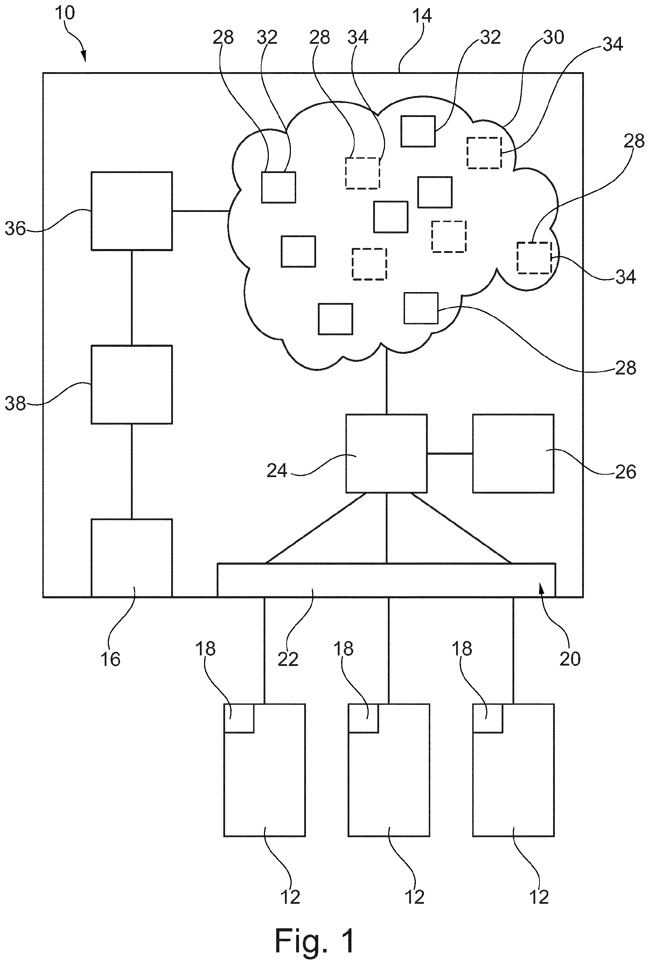

In Figure 1, a testing system 10 is shown that comprises three (different) devices under test 12 that are connected with a mobile communication tester 14.

The mobile communication tester 14 is configured to test the devices under test 12 in a busy and variant network environment. For doing so, the mobile communication tester 14 comprises at least one radio frequency interface 16 for establishing a communication connection with the devices under test 12 each having a corresponding communication interface 18.

For instance, the radio frequency interface 16 as well as the communication interfaces 18 are established by wireless interfaces. However, the radio frequency interface 16 as well as the communication interfaces 18 may also be established by wired interfaces so that the mobile communication tester 14 is connected with the devices under test 12 via cables.

Moreover, the mobile communication tester 14 comprises at least one control interface 20 for establishing a control connection between the mobile communication tester 14 and the devices under test 12. Thus, the devices under test 12 can be controlled by the mobile communication tester 14 via the control interface 20.

In the shown embodiment, the control interfaces 20 are established by a common printed circuit board 22 to which the devices under test 12 are connected via cables.

The devices under test 12 may also be accommodated by the mobile communication tester 14, in particular the control interfaces 20 and housing portions, so that the devices under test 12 are mechanically held by the mobile communication tester 14 for testing purposes.

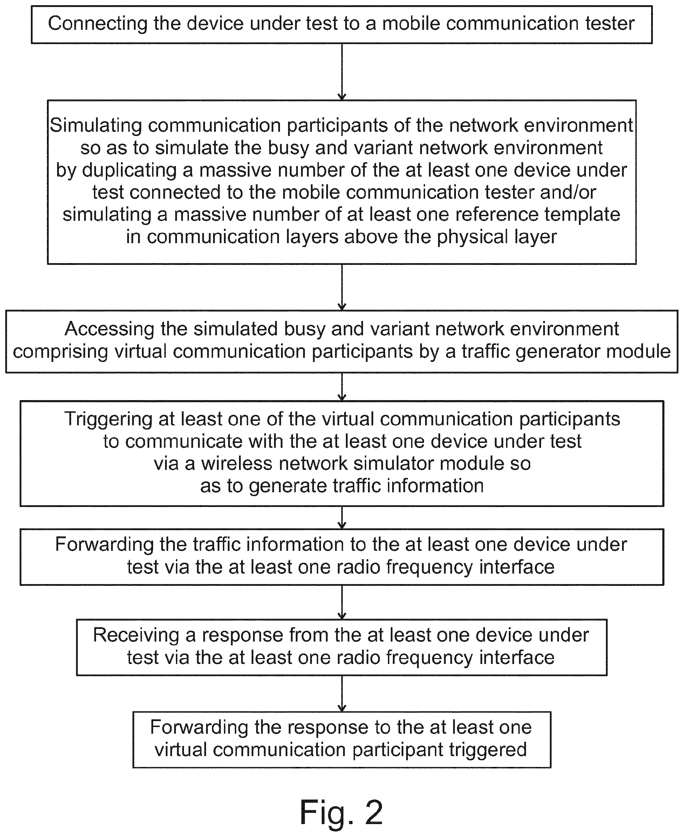

The mobile communication tester 14 further comprises a simulation module 24 that is connected with the control interfaces 20 and a storage unit 26 that can be accessed by the simulation module 24 as will be described later with regard to Figure 2.

As shown in Figure 1 the simulation module 24 is configured to simulate a massive number of virtual communication participants 28 of the network environment so that a virtual communication participants cloud 30 is established that comprises the several virtual communication participants 28. The virtual communication participants 28 are part of the network environment being a busy and variant one as will be described hereinafter.

In order to simulate the busy and variant network environment used for testing the device under test 12, the simulation module 24 may duplicate a massive number of the at least one device under test 12 connected to the mobile communication tester 14 so that a first type of the communication participants 28 corresponds to duplicates 32 of the device under test 12.

Since several devices under test 12 which may be different to each other are connected with the mobile communication tester 14, the simulation module 24 may be configured to duplicate each of the different devices under test 12 appropriately so that duplicates 32 for each of the different devices under test 12 may be simulated as virtual communication participants 28.

Alternatively or additionally, the simulation module 24 may simulate a massive number of reference devices 34 based on at least one reference template in order to simulate the virtual communication participants 28. The reference devices 34 correspond to a second type of the virtual communication participants 28.

These reference devices 34 are simulated based on reference templates which are stored in the storage unit 26. Accordingly, the simulation module 24 accesses the storage unit 26 in order to load at least one reference template stored in the storage unit 26 so as to simulate the reference devices 34 as virtual communication participants 28 of the network environment.

Generally, the virtual communication participants 28 are simulated in communication layers above the physical layer. Thus, these communication participants 28 are not real ones being connected to the mobile communication tester 14.

Accordingly, the virtual communication participants cloud 30 comprises duplicates 32 as well as reference devices 34 both belonging to communications participants 28 used for establishing the busy and variant network environment used for testing the device under test 12.

Moreover, the mobile communication tester 14 has a traffic generator module 36 that is configured to access the virtual communication participants cloud 30, namely the several virtual communication participants 28 simulated by the simulation module 24. The traffic generator module 36 is connected to a network simulator module 38, for instance a wireless network simulator module depending on the type of the radio frequency interface 16, that in turn is connected to the radio frequency interface 16 so as to submit information obtained by the traffic generator module 36 towards the devices under test 12 via the radio frequency interface 16. In a similar manner, the network simulator module 38 is configured to forward information received from the at least one devices under test 12 via the radio frequency interface 16 towards the traffic generator module 36.

In general, the traffic generator module 36 is configured to simulate traffic conditions of the network environment established by the different virtual communication participants 28. For this purpose, the traffic generator module 36 may simulate signaling and/or data traffic that may occur in the respective network environment for testing the device under test 12. For doing so, the traffic generator module 36 may apply a certain traffic profile configuration.

As discussed above, the traffic generator module 36 may access the virtual communication participants cloud 30 so that the traffic conditions simulated by the traffic generator module 36 may be simulated depending on the virtual communication participants 28 simulated by the simulation module 24. Hence, the traffic generator module 36 takes the kind of virtual communication participants 28 into account when applying a certain traffic profile configuration. Since the virtual communication participants cloud 30 is a virtual one, the traffic generator module 36 is connected with a simulation module 24 when accessing the cloud 30.

Furthermore, the traffic generator module 36 may select at least one of the plurality of virtual communication participants 28 simulated of the virtual communication participants cloud 30 wherein the traffic generator module 36 is configured to maintain a process or rather thread for each of the virtual communication participants 28, in particular for each of the virtual communication participants 28 selected.

Moreover, the traffic generator module 36 may adapt the traffic conditions dynamically in order to ensure testing of the at least one device under test 12 on the realistic conditions.

Thus, the number of virtual communication participant 28 selected may be adapted dynamically. Alternatively or additionally, the traffic for each virtual communication participant 28 selected may be adapted.

The network simulator module 38 establishes the connection between the virtual communication participants 28 and the real devices under test 12.

Further, the network simulator module 38 is used for measurement purposes which means that operational measurements are performed by the network simulator module 38 while establishing and applying the network environment for testing the device under test 12. The operational measurements may comprise latency measurements and/or timeout measurements.

In addition, performance metrics of the at least one device under test 12 connected to the mobile communication tester 14 may be prepared by the network simulator module 38. Particularly, the network simulator module 38 connected with the traffic generator module 36 takes the traffic profile configuration applied into account when preparing the performance metrics of the device under test 12.

Furthermore, the network simulator module 38 provides message logs with regard to the interoperable analyses of at least one device under test 12 with regard to the other devices under test 12 connected with the mobile communication tester 14 and/or the virtual communication participants 28 simulated.

Accordingly, the network simulator module 38 via which the communication is established between the virtual communication participants 28 and the at least one device under test 12 is used as the measurement and analyses unit for testing the at least one device under test 12.

As discussed above, the mobile communication tester 14 is generally enabled to verify the interoperability of the at least one device under test 12 with the virtual communication participants 28 simulated.

Since the mobile communication tester 14 may be connected with several devices under test 12, the mobile communication tester 14 is generally configured to verify the interoperability of the several real devices under test 12 with each other.

In general, the mobile communication tester 14 can be used for verifying the interoperability of the real devices under test 12 and/or the interoperability of the real devices under test 12 and the virtual communication participants 28 simulated.

With regard to Figure 2, the method for testing a device under test 12 is described hereinafter.

At the beginning, the device under test 12 is connected with the mobile communication tester 14 so that communication signals and/or control signals may be exchanged between the device under test 12 and the mobile communication tester 14.

Then, the communication participants 28 of the network environment to be used for testing the device under test 12 are simulated. Thus, a busy and variant network environment is simulated appropriately by the mobile communication tester 14.

As discussed above, the busy and variant network environment used for testing the device under test 12 can be done by duplicating a massive number of the at least one device under test 12 connected to the mobile communication tester 14 so as to simulate duplicates 32. Alternatively or additionally, a massive number of at least one reference device 34 is simulated. The simulation takes place in communication layers above the physical layer so as to simulate a plurality of virtual communication participants 28 establishing the busy and variant network environment.

Accordingly, a variant network environment can be established since the same device under test 12 may be simulated in a massive number and/or other devices may be simulated being different to the device under test 12.

Then, the traffic generator module 36 access the plurality of virtual communication participants 28 simulated in order to select at least one of the several virtual communication participants 28 which is triggered to communicate with the at least one device under test 12 via the network simulator module 38 so as to generate traffic information for testing purposes.

The traffic generation module 36 may apply a certain traffic profile configuration for the virtual communication participant 28 selected. The respective traffic information is forwarded via the network simulator module 38 and the respective radio frequency interface 16 towards the device under test 12 which processes the signal appropriately.

The device under test 12 then responds to the traffic information generated by the mobile communication tester 14 wherein the response is received by the mobile communication tester 14 via the radio frequency interface 16. The network simulator module 38 connected to the radio frequency interface 16 forwards the response from the at least one device under test 12 to the respective virtual communication participant 28 via the traffic generator module 36.

The assignment or rather allocation of the information is ensured by using identifications (IDs) for the information, signal(s) and/or response(s) exchanged.

Accordingly, a communication exchange between the at least one virtual communication participant 28 and the device under test 12 is established. During the data exchange and/or signaling exchange between the device under test 12 and the virtual communication participant 28, the network simulator module 38 performs the respective measurements such as operational measurements.

Further, the network simulator module 38 provides message logs with regard to the interoperable analyses of the device under test 12 with regard to the virtual communication participant(s) 28 and/or the other devices under test 12 connected to the mobile communication tester 14.

Moreover performance metrics of the at least one device under test 12 with regard to the busy and variant network environment are prepared, in particular based on traffic profile configuration(s) used and applied by the traffic generator module 36.

Further, the traffic generator module 36 triggers several virtual communication participants 28 in a subsequent manner so that it is ensured that the device under test 12 is tested by a variant network environment, in particular in a subsequent manner.

Hence, a variant and dynamic network environment is established for testing purposes which is a busy one.

The whole mobile communication tester 14 may be a device having a housing that encompasses the respective components, namely the simulation module 24, the storage unit 26, the traffic generator module 36 and/or the network simulator module 38. Hence, at least the simulation module 24 is integrated.

## Claims

1. A mobile communication tester (14) for testing at least one real device under test (12) in a busy and variant network environment, the mobile communication tester (14) comprising at least one radio frequency interface (16) for establishing a communication connection with the real device under test (12) as well as at least one control interface (20) for controlling the device under test, wherein the mobile communication tester (14) further comprises a simulation module (24) configured to simulate virtual communication participants (28) of the network environment that are enabled to communicate with the at least one real device under test (12) so as to simulate the busy and variant network environment, **characterised in that** the simulation module (24) is configured to duplicate a massive number of the at least one real device under test (12) connected to the mobile communication tester (14) and to simulate a massive number of reference devices (34) being different to the at least one real device under test (12) based on at least one reference template in communication layers above the physical layer.

2. The mobile communication tester (14) tester according to claim 1, wherein the mobile communication tester (14) comprises a storage unit (26), wherein the at least one reference template is stored in the storage unit (26).

3. The mobile communication tester (14) according to claim 1 or 2, wherein the at least one control interface (20) is established on a printed circuit board (22).

4. The mobile communication tester (14) according to any of the preceding claims, wherein the mobile communication tester (14) comprises a traffic generator module (36) configured to simulate traffic conditions of the network environment.

5. The mobile communication tester (14) according to claim 4, wherein the traffic generator module (36) is connected with the simulation module (24) so that traffic conditions are simulated depending on the virtual communication participants (28) simulated by the simulation module (24).

6. The mobile communication tester (14) according to any of the preceding claims, wherein the mobile communication tester (14) comprises a network simulator module (38) connected with the at least one real device under test (12) via the at least one radio frequency interface (16).

7. The mobile communication tester (14) according to claim 6 and any of claims 4 and 5, wherein the network simulator module (38) is connected with the traffic generator module (36) so that the mobile communication tester (14) is configured to trigger the virtual communication participants (28) to communicate with the real device under test (12) via the network simulator module (38) and the traffic generator module (36).

8. The mobile communication tester (14) according to any of claims 6 and 7, wherein the network simulator module (38) is configured to perform operational measurements, to prepare performance metrics of the at least one real device under test (12), and/or to provide message logs with regard to the interoperable analysis of the real device under test (12).

9. The mobile communication tester (14) according to any of the preceding claims, wherein the mobile communication tester (14) is configured to verify the interoperability of the real device under test (12) with the virtual communication participants (28).

10. The mobile communication tester (14) according to any of the preceding claims, wherein the mobile communication tester (14) has several control interfaces (20) for controlling several real devices under test (12).

11. A testing system (10) comprising at least one real device under test (12) and a mobile communication tester (14) according to any of the preceding claims, wherein the at least one real device under test (12) is connected with the mobile communication tester (14) via at least one of the radio frequency interface (16) and the control interface (20).

12. A method for testing at least one real device under test (12) in a busy and variant network environment, the method being performed by a mobile communication tester (14) and comprising the following steps:
- Connecting to the real device under test (12) Z via at least one radio frequency interface (16) comprised in the mobile communication tester (14),
- Simulating virtual communication participants (28) of the network environment that are enabled to communicate with the at least one real device under test (12) so as to simulate the busy and variant network environment by duplicating a massive number of the at least one real device under test (12) connected to the mobile communication tester (14), and
- Simulating a massive number of reference devices (34) being different to the at least one real device under test (12) based on at least one reference template in communication layers above the physical layer.

13. The method according to claim 12, wherein the real device under test (12) is tested in the busy and variant network environment by the following steps:
- Accessing the simulated virtual communication participants (28) by a traffic generator module (36),
- Triggering at least one of the virtual communication participants (28) to communicate with the at least one real device under test (12) via a network simulator module (38) so as to generate traffic information,
- Forwarding the traffic information to the at least one real device under test (12) via the at least one radio frequency interface (16),
- Receiving a response from the at least one real device under test (12) via the at least one radio frequency interface (16), and
- Forwarding the response to the at least one virtual communication participant (28) triggered.

14. The method according to claim 13, wherein operational measurements are performed, message logs with regard to the interoperable analysis of the device under test are provided, and/or performance metrics of the at least one device under test are prepared during the testing.

15. The method according to claim 13 or 14, wherein the traffic generator module (36) triggers several virtual communication participants (28) subsequently.

## Patentansprüche

1. Mobilkommunikationsprüfgerät (14) zum Prüfen wenigstens eines echten Prüfobjekts (12) in einer geschäftigen und veränderlichen Netzwerkumgebung, wobei das Mobilkommunikationsprüfgerät (14) wenigstens eine Funkfrequenzschnittstelle (16) zur Herstellung einer Kommunikationsverbindung mit dem echten Prüfobjekt (12) sowie wenigstens eine Steuerschnittstelle (20) zur Steuerung des Prüfobjekts umfasst, wobei das Mobilkommunikationsprüfgerät (14) ferner ein Simulationsmodul (24) umfasst, das so eingerichtet ist, dass es virtuelle Kommunikationsteilnehmer (28) der Netzwerkumgebung simuliert, die in die Lage versetzt sind, mit dem wenigstens einen echten Prüfobjekt (12) so zu kommunizieren, dass die geschäftige und veränderliche Netzwerkumgebung simuliert ist, **dadurch gekennzeichnet, dass** das Simulationsmodul (24) so eingerichtet ist, dass es eine enorme Anzahl des wenigstens einen echten Prüfobjekts (12), das mit dem Mobilkommunikationsprüfgerät (14) verbunden ist, vervielfältigt und eine enorme Anzahl von Referenzvorrichtungen (34) simuliert, die sich von dem wenigstens einen echten Prüfobjekt (12) unterscheiden, auf der Grundlage wenigstens einer Referenzvorlage in Kommunikationsschichten oberhalb der Bitübertragungsschicht.

2. Mobilkommunikationsprüfgerät (14) nach Anspruch 1, wobei das Mobilkommunikationsprüfgerät (14) eine Speichereinheit (26) umfasst, wobei die wenigstens eine Referenzvorlage in der Speichereinheit (26) gespeichert ist.

3. Mobilkommunikationsprüfgerät (14) nach Anspruch 1 oder 2, wobei die wenigstens eine Steuerschnittstelle (20) auf einer gedruckten Leiterplatte (22) hergestellt ist.

4. Mobilkommunikationsprüfgerät (14) nach einem der vorhergehenden Ansprüche, wobei das Mobilkommunikationsprüfgerät (14) ein Verkehrsgeneratormodul (36) umfasst, das so eingerichtet ist, dass es Verkehrsbedingungen der Netzwerkumgebung simuliert.

5. Mobilkommunikationsprüfgerät (14) nach Anspruch 4, wobei das Verkehrsgeneratormodul (36) so mit dem Simulationsmodul (24) verbunden ist, dass Verkehrsbedingungen in Abhängigkeit von den vom Simulationsmodul (24) simulierten virtuellen Kommunikationsteilnehmern (28) simuliert werden.

6. Mobilkommunikationsprüfgerät (14) nach einem der vorhergehenden Ansprüche, wobei das Mobilkommunikationsprüfgerät (14) ein Netzwerksimulatormodul (38) umfasst, das über die wenigstens eine Funkfrequenzschnittstelle (16) mit dem wenigstens einen echten Prüfobjekt (12) verbunden ist.

7. Mobilkommunikationsprüfgerät (14) nach Anspruch 6 und einem der Ansprüche 4 und 5, wobei das Netzwerksimulatormodul (38) so mit dem Verkehrsgeneratormodul (36) verbunden ist, dass das Mobilkommunikationsprüfgerät (14) dazu eingerichtet ist, auszulösen, dass die virtuellen Kommunikationsteilnehmer (28) über das Netzwerksimulatormodul (38) und das Verkehrsgeneratormodul (36) mit dem echten Prüfobjekt (12) kommunizieren.

8. Mobilkommunikationsprüfgerät (14) nach einem der Ansprüche 6 und 7, wobei das Netzwerksimulatormodul (38) so eingerichtet ist, dass es betriebliche Messungen durchführt, Leistungskennzahlen des wenigstens einen echten Prüfobjekts (12) erstellt und/oder Nachrichtenprotokolle hinsichtlich der interoperablen Analyse des echten Prüfobjekts (12) bereitstellt.

9. Mobilkommunikationsprüfgerät (14) nach einem der vorhergehenden Ansprüche, wobei das Mobilkommunikationsprüfgerät (14) dazu eingerichtet ist, die Interoperabilität des echten Prüfobjekts (12) mit den virtuellen Kommunikationsteilnehmern (28) zu überprüfen.

10. Mobilkommunikationsprüfgerät (14) nach einem der vorhergehenden Ansprüche, wobei das Mobilkommunikationsprüfgerät (14) mehrere Steuerschnittstellen (20) zur Steuerung mehrerer echter Prüfobjekte (12) aufweist.

11. Prüfsystem (10) mit wenigstens einem echten Prüfobjekt (12) und einem Mobilkommunikationsprüfgerät (14) nach einem der vorhergehenden Ansprüche, wobei das wenigstens eine echte Prüfobjekt (12) über die Funkfrequenzschnittstelle (16) und/oder die Steuerschnittstelle (20) mit dem Mobilkommunikationsprüfgerät (14) verbunden ist.

12. Verfahren zum Prüfen wenigstens eines echten Prüfobjekts (12) in einer geschäftigen und veränderlichen Netzwerkumgebung, wobei das Verfahren von einem Mobilkommunikationsprüfgerät (14) durchgeführt wird und die folgenden Schritte umfasst:
- Verbinden mit dem echten Prüfobjekt (12) über wenigstens eine Funkfrequenzschnittstelle (16), die in dem Mobilkommunikationsprüfgerät (14) enthalten ist,
- Simulieren virtueller Kommunikationsteilnehmer (28) der Netzwerkumgebung, die in die Lage versetzt sind, mit dem wenigstens einen echten Prüfobjekt (12) so zu kommunizieren, dass die geschäftige und veränderliche Netzwerkumgebung simuliert wird, indem eine enorme Anzahl des wenigstens einen echten Prüfobjekts (12), das mit dem Mobilkommunikationsprüfgerät (14) verbunden ist, vervielfältigt wird, und
- Simulieren einer enormen Anzahl von Referenzvorrichtungen (34), die sich von dem wenigstens einen echten Prüfobjekt (12) unterscheiden, auf der Grundlage wenigstens einer Referenzvorlage in Kommunikationsschichten oberhalb der Bitübertragungsschicht.

13. Verfahren nach Anspruch 12, bei dem das echte Prüfobjekt (12) in der geschäftigen und veränderlichen Netzwerkumgebung durch die folgenden Schritte geprüft wird:
- Zugreifen auf die simulierten virtuellen Kommunikationsteilnehmer (28) durch ein Verkehrsgeneratormodul (36),
- Auslösen, dass wenigstens einer der virtuellen Kommunikationsteilnehmer (28) über ein Netzwerksimulatormodul (38) mit dem wenigstens einen echten Prüfobjekt (12) so kommuniziert, dass Verkehrsinformationen erzeugt werden,
- Weiterleiten der Verkehrsinformationen an das wenigstens eine echte Prüfobjekt (12) über die wenigstens eine Funkfrequenzschnittstelle (16),
- Empfangen einer Antwort von dem wenigstens einen echten Prüfobjekt (12) über die wenigstens eine Funkfrequenzschnittstelle (16) und
- Weiterleiten der Antwort an den wenigstens einen ausgelösten virtuellen Kommunikationsteilnehmer (28).

14. Verfahren nach Anspruch 13, bei dem während des Prüfens betriebliche Messungen durchgeführt, Nachrichtenprotokolle hinsichtlich der interoperablen Analyse des Prüfobjekts bereitgestellt und/oder Leistungskennzahlen des wenigstens einen Prüfobjekts erstellt werden.

15. Verfahren nach Anspruch 13 oder 14, bei dem das Verkehrsgeneratormodul (36) anschließend mehrere virtuelle Kommunikationsteilnehmer (28) auslöst.

## Revendications

1. Testeur de communication mobile (14) pour tester au moins un dispositif sous test réel (12) dans un environnement de réseau actif et changeant, le testeur de communication mobile (14) comprenant au moins une interface à radiofréquence (16) pour l'établissement d'une liaison de communication avec le dispositif sous test réel (12), et au moins une interface de commande (20) pour la commande du dispositif sous test, le testeur de communication mobile (14) comprenant en outre un module de simulation (24) réalisé de manière à simuler des participants de communication virtuels (28) de l'environnement de réseau qui sont autorisés à communiquer avec ledit au moins un dispositif sous test réel (12) afin de simuler l'environnement de réseau actif et changeant, **caractérisé en ce que** le module de simulation (24) est réalisé de manière à reproduire un nombre énorme dudit au moins un dispositif sous test réel (12) relié au testeur de communication mobile (14) et à simuler un nombre énorme de dispositifs de référence (34) différents dudit au moins un dispositif sous test réel (12) sur la base d'au moins un modèle de référence dans des couches de communication au-dessus de la couche physique.

2. Testeur de communication mobile (14) selon la revendication 1, le testeur de communication mobile (14) comprenant une unité de mémorisation (26), ledit au moins un modèle de référence étant mémorisé dans l'unité de mémorisation (26).

3. Testeur de communication mobile (14) selon la revendication 1 ou 2, ladite au moins une interface de commande (20) étant établie sur une carte de circuit imprimé (22).

4. Testeur de communication mobile (14) selon l'une des revendications précédentes, le testeur de communication mobile (14) comprenant un module générateur de trafic (36) réalisé de manière à simuler des conditions de trafic de l'environnement du réseau.

5. Testeur de communication mobile (14) selon la revendication 4, le module générateur de trafic (36) étant relié au module de simulation (24) de telle sorte que des conditions de trafic sont simulées en fonction des participants de communication virtuels (28) simulés par le module de simulation (24).

6. Testeur de communication mobile (14) selon l'une des revendications précédentes, le testeur de communication mobile (14) comprenant un module de simulation de réseau (38) qui est relié audit au moins un dispositif sous test réel (12) via ladite au moins une interface à radiofréquence (16).

7. Testeur de communication mobile (14) selon la revendication 6 et l'une des revendications 4 et 5, le module de simulation de réseau (38) étant relié au module générateur de trafic (36) de telle sorte que le testeur de communication mobile (14) est réalisé de manière à déclencher une communication des participants de communication virtuels (28) avec le dispositif sous test réel (12) via le module de simulation de réseau (38) et le module générateur de trafic (36).

8. Testeur de communication mobile (14) selon l'une des revendications 6 et 7, le module de simulation de réseau (38) étant réalisé de manière à effectuer des mesures opérationnelles, à établir des indicateurs de performance dudit au moins un dispositif sous test réel (12) et/ou à fournir des journaux de messages concernant l'analyse interopérable du dispositif sous test réel (12).

9. Testeur de communication mobile (14) selon l'une des revendications précédentes, le testeur de communication mobile (14) étant réalisé de manière à vérifier l'interopérabilité du dispositif sous test réel (12) avec les participants de communication virtuels (28).

10. Testeur de communication mobile (14) selon l'une des revendications précédentes, le testeur de communication mobile (14) présentant plusieurs interfaces de commande (20) pour commander plusieurs dispositifs sous test réels (12).

11. Système de test (10) comprenant au moins un dispositif sous test réel (12) et un testeur de communication mobile (14) selon l'une des revendications précédentes, ledit au moins un dispositif sous test réel (12) étant relié au testeur de communication mobile (14) via l'interface à radiofréquence (16) et/ou l'interface de commande (20).

12. Procédé pour tester au moins un dispositif sous test réel (12) dans un environnement de réseau actif et changeant, le procédé étant réalisé par un testeur de communication mobile (14) et comprenant les étapes suivantes :
- la connexion au dispositif sous test réel (12) par l'intermédiaire d'au moins une interface à radiofréquence (16) comprise dans le testeur de communication mobile (14),
- la simulation de participants de communication virtuels (28) de l'environnement de réseau qui sont autorisés à communiquer avec ledit au moins un dispositif sous test réel (12) pour simuler l'environnement de réseau actif et changeant en reproduisant un nombre énorme dudit au moins un dispositif sous test réel (12) relié au testeur de communication mobile (14), et
- la simulation d'un nombre énorme de dispositifs de référence (34) différents dudit au moins un dispositif sous test réel (12) sur la base d'au moins un modèle de référence dans des couches de communication au-dessus de la couche physique.

13. Procédé selon la revendication 12, le dispositif sous test réel (12) étant testé dans l'environnement de réseau actif et changeant au moyen des étapes suivantes :
- l'accès aux participants de communication virtuels simulés (28) par un module générateur de trafic (36),
- le déclenchement d'une communication d'au moins un des participants de communication virtuels (28) avec ledit au moins un dispositif sous test réel (12) via un module de simulation de réseau (38) pour générer des informations de trafic,
- la transmission des informations de trafic audit au moins un dispositif sous test réel (12) via ladite au moins une interface à radiofréquence (16),
- la réception d'une réponse dudit au moins un dispositif sous test réel (12) via ladite au moins une interface à radiofréquence (16), et
- la transmission de la réponse audit au moins un participant de communication virtuel (28) déclenché.

14. Procédé selon la revendication 13, des mesures opérationnelles étant effectuées, des journaux de messages concernant l'analyse interopérable du dispositif sous test étant fournis et/ou des indicateurs de performance dudit au moins un dispositif sous test étant établis pendant le test.

15. Procédé selon la revendication 13 ou 14, le module générateur de trafic (36) déclenchant ensuite plusieurs participants de communication virtuels (28).
